# EUROPEAN PATENT APPLICATION

(11) **EP 1 168 872 A1**
(43) Date of publication of application: **02.01.2002**
(21) Application number: 00901910.0
(22) Date of filing: 26.01.2000
(51) Int. Cl.: H04Q 7/38, H04M 1/00, H04M 1/725

(54) **CELLULAR PHONE AND METHOD OF DELIVERING INFORMATION FROM CELLULAR PHONE**

(71) Applicant: MITSUBISHI DENKI KABUSHIKI KAISHA, Tokyo 100-8310 (JP)
(72) Inventor: MURATA, Makoto, Tokyo 100-8310 (JP)
(74) Representative: Bohnenberger, Johannes, Dr.
(86) International application number: JP0000388
(87) International publication number: WO0156324

(57) **Abstract**

There is provided a mobile telephone (20) allowing a user to transmit minimal information to a counterpart if the user and the counterpart cannot make a verbal communication with each other. The mobile telephone (20) is connected to a network system for mobile communications accommodating a plurality of mobile telephones. The mobile telephone (20) includes a user information generation block (24) generating user information related to a condition of the user, and a communication block (22) connected to said user information generation block (24) to transmit the user information on the network system for mobile communications.

## Description

### Technical Field

The present invention relates generally to mobile telephones and information communication methods for use therein and particularly to mobile telephones allowing an emergency communication in a satellite communication system having a worldwide service area, a cellular system capable of communication between nations using different languages and other similar mobile communication systems and information communication methods for use in such mobile telephones.

### Background Art

Conventionally, if a user of a mobile communication system has encountered an emergency, the user dials a specific telephone number and then speak to an operator to communicate with the operator and thus provide the operator with information.

For example, if a user holding a contract with a Global System for Mobile communication (GSM) network of the United Kingdom goes to Germany and has encountered an emergency there, the user uses a mobile telephone to dial a European standardized emergency number "112," a number commonly used in the GSM network regardless of nation and network provider. The user thus speaks to a German operator to provide the operator with information.

Through such a series of operations, the operator has a verbal communication with the user having made an emergency call and thus specifically grasps the emergency that the user is currently facing.

If the operator and the user speak different languages and are thus unable to communicate with each other, however, the user may fail to correctly inform the operator of the emergency that the user is currently facing. For example if in the above example the user can only speak English and the operator cannot understand English, the user's emergency would not be informed accurately.

Such a problem often occurs for example in a satellite communication system having a worldwide service area, a cellular system allowing communications between nations using different languages, and other similar systems.

To overcome such a disadvantage, Japanese Patent Laying-Open No. 10-294807 discloses a mobile communication system transmitting information indicating an occurrence of an emergency without depending on a verbal communication. This mobile communication system uses a mobile telephone provided with an emergency button. When a user of the mobile telephone has encountered an emergency, the user presses the emergency button to make a call and transmits on a network an emergency code indicating that an emergency has occurred. The occurrence of the emergency is thus informed.

The system, however, can only transmit a code indicating that an emergency has occurred. As such, the user is required to make a verbal communication with an operator if the former provides the latter with specific information indicating the user's emergency, such as whether the user needs the police, whether the user needs a fire brigade, the language(s) that the user can speak, the location of the user, and other similar information. As such, if the user and the operator speak different languages and cannot understand each other's language they still would have a similar problem, as described above.

### Disclosure of the Invention

One object of the present invention therefore is to provide a mobile telephone allowing a user to provide a counterpart with minimal information if the user and the counterpart cannot make a verbal communication therebetween, and an information communication method for use in the mobile telephone.

Another object of the present invention is to provide a mobile telephone allowing a user to be located by a counterpart, and an information communication method for use in the mobile telephone.

Still another object of the present invention is to provide a mobile telephone allowing a counterpart incapable of verbal communication with a user to be rapidly switched to another counterpart capable of speaking a language that the user can understand, and an information communication method for use in the mobile telephone.

Still another object of the present invention is to provide a mobile telephone allowing a user to notify a counterpart of the user's current condition if the user and the counterpart cannot make a verbal communication therebetween, and an information communication method for use in the mobile telephone.

The present invention in one aspect provides a mobile telephone connected to a network system for mobile communications accommodating a plurality of mobile telephones. The mobile telephone includes: a user information generation block generating user information related to a condition of a user; and a communication block connected to the user information generation block to transmit the user information on the network system for mobile communications.

As such, if the user cannot make a verbal communication with a counterpart the user can transmit the user information to provide the counterpart with minimal information.

Preferably the mobile telephone further includes a positional-information acquisition block acquiring positional information of the mobile telephone, wherein the user information generation block is connected to the positional-information acquisition block to provide the positional information of the mobile telephone as the user information.

The user can transmit the positional information of the mobile telephone as the user information. Thus for example if the user is in distress, the counterpart can determine the location of the user.

Still preferably the mobile telephone also includes a language setting block used by the user to previously set information related to a language that the user can understand, wherein the user information generation block is connected to the language setting block to provide as the user information the information related to the language that the user can understand.

The user can transmit as the user information a language that the user can understand. As such, if the user cannot make a verbal communication with a counterpart, the user information can be referred to to have the counterpart rapidly switched to a different counterpart who can speak the language that the user can understand.

Still preferably the mobile telephone also includes a condition entry block used by the user to input a code defining a condition of the user, wherein the user information generation block is connected to the condition entry block to provide as the user information the code defining the condition of the user.

The user can transmit to a counterpart a code defining a condition of the user. As such, if the user cannot make a verbal communication with the counterpart, the user can notify the counterpart of the user's current condition.

The present invention in another aspect provides a method of communicating information for use in a mobile telephone connected to a network system for mobile communications accommodating a plurality of mobile telephones. The present method includes the steps of: generating user information related to a condition of a user; and transmitting the user information on the network for mobile communications.

As such, if the user cannot make a verbal communication with a counterpart, the user can transmit the user information to provide the counterpart with minimal information.

### Brief Description of the Drawings

Fig. 1 is a block diagram showing a configuration of a mobile telephone in an embodiment of the present invention;
Fig. 2 shows a configuration of user information in an embodiment of the present invention;
Fig. 3 illustrates items of emergency information in an embodiment of the present invention; and
Fig. 4 represents a sequence in a mobile communication system in an embodiment of the present invention, starting with an emergency call establishment request and ending with an establishment of a communication.

### Best Mode for Carrying Out the Invention

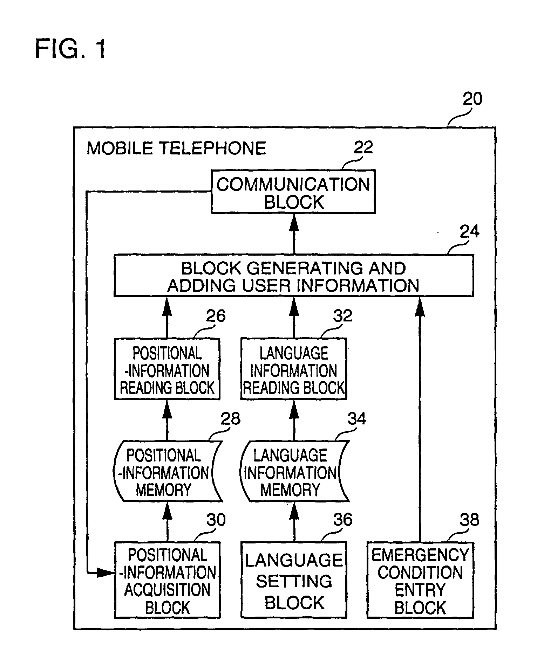

Fig. 1 shows a mobile telephone 20 for use in a mobile communication system in an embodiment of the present invention. Mobile telephone 20 includes a block 22 communicating a signal with a network, a block 30 connected to block 22 to acquire from a signal transmitted from the network the information related to the location of a user 60 (i.e., the information related to the location of mobile telephone 20), a memory 28 connected to block 30 to store the information of the current location of mobile telephone 20, and a block 26 connected to memory 28 to read therefrom the information of the current location of mobile telephone 20.

Mobile telephone 20 also includes a block 36 used by the user to previously set information related to a language that the user can understand, a memory 34 formed for example of nonvolatile memory and connected to block 36 to store the language information set via block 36, and a block 32 connected to memory 34 to read the language information therefrom.

Mobile telephone 20 also includes a block 38 used by the user to input thereto a code defining an item of emergency, and a block 24 connected to blocks 26, 32, 38 and 22 to generate the user information described hereinafter and add the user information to a signal to be transmitted from block 22.

Mobile telephone 20 is connected to a single network system for mobile communications accommodating a plurality of mobile telephones. Or it is connected to the network system for mobile communications that is included in a plurality of interconnected network systems for mobile communications and it is thus connected to the mutually accessible network systems for mobile communications.

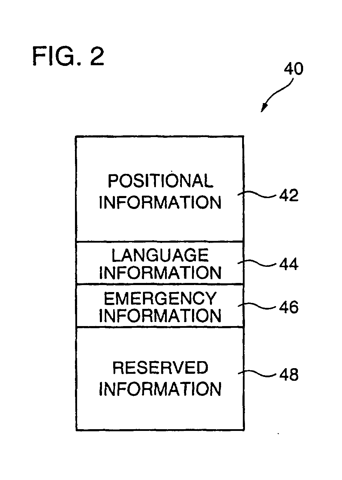

With reference to Fig. 2, user information 40 generated at block 24 is configured of information 42 of the location of the mobile telephone, information 44 of a language that the user can understand, information 46 corresponding to a code defining an item of emergency, and reserved information 48 of other user information. These information are merely illustrative and user information 40 may include items of other information previously defined between the mobile telephone and an operator.

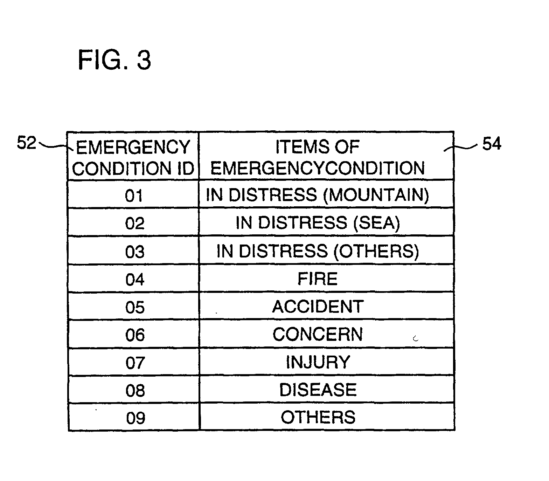

Reference will now be made to Fig. 3 to describe items of the Fig. 2 emergency information 46. Emergency information 46 corresponds to emergency identifications (emergency IDs) shown in Fig. 3. For example, an emergency ID 01 represents that the user has got lost in the mountains. An emergency ID 07 represents that the user is injured.

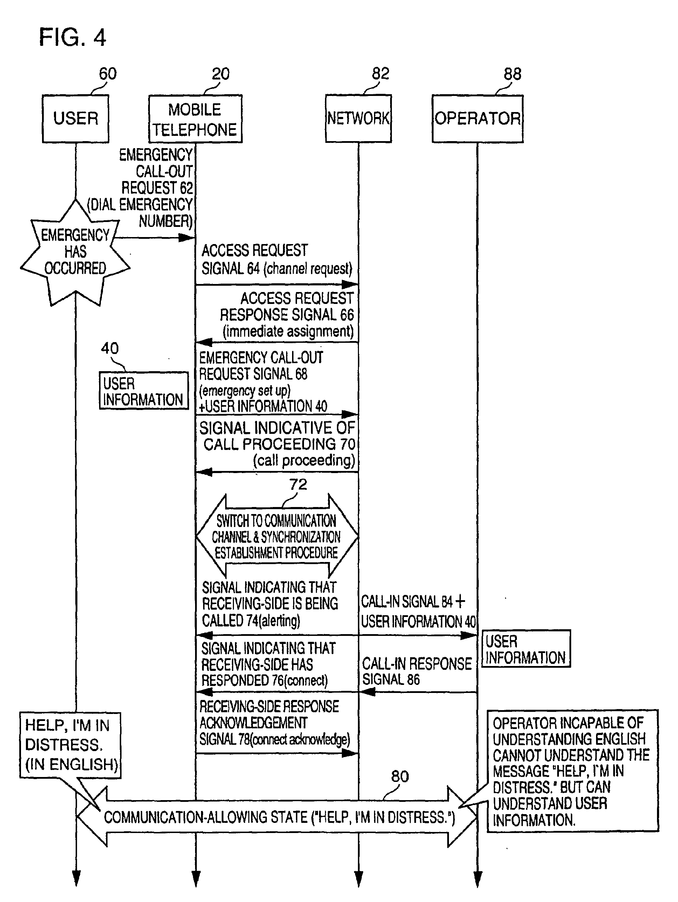

Reference will now be made to Fig. 4 to describe by way of example a sequence provided to establish an emergency call in the Global System for Mobile Communications (GSM) system, a cellular system standardized by the European Telecommunications Standards Institute (ETSI) and adopted in European countries. Fig. 4 represents a sequence based on the contents described in a recommendation of the ETSI "Digital cellular telecommunications system (Phase 2); Mobile radio interface layer 3 specification (GSM 04.08)," ETS 300 557, May 1996, Fourth Edition.

For example, if user 60 holding a contract with a GSM network of the United Kingdom goes to Germany and has encountered an emergency, user 60 uses mobile telephone 20 to dial a European standardized emergency number "112," a number commonly used in the GSM network regardless of nation and network provider, to issue an emergency call-out request 62.

Mobile telephone 20 receives emergency call-out request 62 from user 60 transmits an access request signal 64 to a GSM network 82 of Germany. GSM network 82 receives access request signal 64 and transmits an access request response signal 66 to mobile telephone 20.

Before mobile telephone 20 transmits an emergency call-out request signal 68, described hereinafter, block 24 generates user information 40. Mobile telephone 20 receives an access request response signal 66. According to a parameter included in access request response signal 66, mobile telephone 20 transmits user information 40 together with emergency call-out request signal 68 to GSM network 82 of Germany.

GSM network 82 transmits to mobile telephone 20 a signal 70 indicating that a call-in and call-out processing is now proceeding.

Thereafter between mobile telephone 20 and network 82 a communication channel switches and a synchronization establishment process is provided to make a transition to a synchronization establishment state 72.

When synchronization has been established between mobile telephone 20 and GSM network 82, GSM network 82 transmits a call-in signal 84 together with user information 40 to operator 88 dealing with emergencies. Simultaneously, GSM network 82 transmits to mobile telephone 20 a signal 74 indicating that the receiving side, i.e., operator 88 is being called.

The operator receives user information 40 and call-in signal 84 and transmits to GSM network 82 a call-in response signal 86 indicating that the information and the signal have been received.

GSM network 82 receives call-in response signal 86 and transmits to mobile telephone 20 a signal 76 indicating that the receiving side (operator 88) has received user information 40 and call-in signal 84.

Mobile phone 20 receives signal 76 and transmits to GSM network 82 a receiving-side response acknowledgement signal 78. After such a series of operation as above is provided, there is made between the user and the operator a transition to a communication allowing state 80.

If user 60 can only speak English and operator 88 cannot understand English, the user's verbal message such as "help! I'm in distress!" cannot be understood by operator 88. In contrast, if user information 40 includes emergency information 46 with emergency ID "01" set and it also includes positional information 42 with the currently user's location set, operator 88, incapable of understanding the language that the user speaks, can understand that the user is in distress in the mountains and also be informed of the location of the user in distress.

Furthermore, if user information 40 includes language information 44 having set a language that user 60 can understand, the user can have the operator rapidly switched to another operator who can speak the language.

Thus in the present invention if user 60 and operator 88 cannot make a verbal communication with each other, user 60 can transmit minimal information of the user's emergency situation.

Note that while user information 40 is added to emergency call-out request signal 68 to be transmitted from mobile telephone 20 to network 82, it may be added for example to access request signal 64 or any other similar signal that is transmitted from mobile telephone 20 to network 82.

Furthermore, once communication state 80 has been established, on an audio channel thereof a previously defined rule may be followed to transmit contents of user information 40 in the form of a Morse code using a dual-tone multifrequency (DTMF) signal. Furthermore, user information 40 may be decimalized and transmitted in a DTMF signal.

### Industrial Applicability

Thus the present mobile communication system is useful in informing an operator of an occurrence of an emergency if any verbal communication cannot be made with the operator. The present system is particularly useful for satellite communication systems having a worldwide service area and cellular systems capable of communication between nations using different languages.

## Claims

1. A mobile telephone (20) connected to a network system for mobile communications accommodating a plurality of mobile telephones, comprising:
a user information generation block (24) generating user information (40) related to a condition of a user; and
a communication block (22) connected to said user information generation block (24) to transmit said user information (40) on the network system for mobile communications.

2. The mobile telephone according to claim 1, further comprising a positional-information acquisition block (30) acquiring positional information of said mobile telephone (20), wherein said user information generation block (24) is connected to said positional-information acquisition block (30) to provide said positional information of said mobile telephone (20) as said user information (40).

3. The mobile telephone according to claim 2, further comprising a language setting block (36) used by the user to previously set information related to a language that the user can understand, wherein said user information generation block (24) is connected to said language setting block (36) to add to said user information (40) said information related to the language that the user can understand.

4. The mobile telephone according to claim 3, further comprising a condition entry block (38) used by the user to input a code defining a condition of the user, wherein said user information generation block (24) is connected to said condition entry block (38) to add to said user information (40) said code defining the condition of the user.

5. The mobile telephone according to claim 2, further comprising a condition entry block (38) used by the user to input a code defining a condition of the user, wherein said user information generation block (24) is connected to said condition entry block (38) to add to said user information (40) said code defining the condition of the user.

6. The mobile telephone according to claim 1, further comprising a language setting block (36) used by the user to previously set information related to a language that the user can understand, wherein said user information generation block (24) is connected to said language setting block (36) to add to said user information (40) said information related to the language that the user can understand.

7. The mobile telephone according to claim 6, further comprising a condition entry block (38) used by the user to input a code defining a condition of the user, wherein said user information generation block (24) is connected to said condition entry block (38) to add to said user information (40) said code defining the condition of the user.

8. The mobile telephone according to claim 1, further comprising a condition entry block (38) used by the user to input a code defining a condition of the user, wherein said user information generation block (24) is connected to said condition entry block (38) to add to said user information (40) said code defining the condition of the user.

9. A method of communicating information, for use in a mobile telephone (20) connected to a network system for mobile communications accommodating a plurality of mobile telephones, comprising the steps of:
generating user information (40) related to a condition of a user; and
transmitting said user information on the network for mobile communications.

10. The method according to claim 9, wherein the step of generating said user information (40) includes the steps of:
acquiring positional information of said mobile telephone (20); and
providing said positional information of said mobile telephone (20) as said user information (40).

11. The method according to claim 10, wherein the step of generating said user information (40) further includes the steps of:
previously setting information related to a language that the user can understand; and
adding to said user information said information related to the language that the user can understand.

12. The method according to claim 11, wherein the step of generating said user information (40) further includes the steps of:
inputting a code defining a condition of the user; and
adding to said user information said code defining the condition of the user.

13. The method according to claim 10, wherein the step of generating said user information (40) further includes the steps of:
inputting a code defining a condition of the user; and
adding to said user information said code defining the condition of the user.

14. The method according to claim 9, wherein the step of generating said user information (40) further includes the steps of:
previously setting information related to a language that the user can understand; and
providing as said user information said information related to the language that the user can understand.

15. The method according to claim 14, wherein the step of generating said user information (40) further includes the steps of:
inputting a code defining a condition of the user; and
adding to said user information said code defining the condition of the user.

16. The method according to claim 9, wherein the step of generating said user information (40) further includes the steps of:
inputting a code defining a condition of the user; and
providing as said user information said code defining the condition of the user.
